# EUROPÄISCHE PATENTSCHRIFT

(11) **EP 2 143 517 B1**
(45) Veröffentlichungstag und Bekanntmachung des Hinweises auf die Patenterteilung: **27.06.2012**
(21) Anmeldenummer: 09005401.6
(22) Anmeldetag: 16.04.2009
(51) Int. Cl.: B23D 47/04, B27B 5/06

(54) **Verfahren zum Betreiben einer Plattenaufteilanlage für großformatige plattenförmige Werkstücke, insbesondere Möbelteile, sowie Plattenaufteilanlage**
Method of operating a plate partitioning facility for partitioning plate-shaped workpieces, in particular furniture items and plate partitioning facility
Procédé de fonctionnement d'une installation de répartition de plaques pour pièces usinées en forme de plaque de grand format, notamment éléments de meuble et installation de répartition de plaques

(30) Priorität: 08.07.2008 DE 102008032160
(43) Veröffentlichungstag der Anmeldung: 13.01.2010
(73) Patentinhaber: HOLZMA Plattenaufteiltechnik GmbH, 75365 Calw-Holzbronn (DE)
(72) Erfinder: Blaich, Markus, 75365 Calw-Stammheim (DE); Brock, Reiner, 72218 Wildberg (DE); Esser, Kim, 71126 Nebringen (DE); Gsell, Rainer, Herrenberg (DE); Hartmann, Gerhard, 72224 Ebhausen-Rotfelden (DE); Martynenko, Sergey, 70188 Stuttgart (DE); Mömesheim, Arne, 75378 Bad Liebenzell (DE); Oertel, Wolfgang, 72461 Albstadt (DE); Seeger, Ingolf, 72160 Horb-Nordstetten (DE); Sörgel, Rudolf, 75385 Bad Teinach (DE)
(74) Vertreter: Dreiss

(56) Entgegenhaltungen:
- EP-A- 0 230 297
- EP-A- 1 057 599
- EP-A- 1 147 867
- WO-A-99/61212
- WO-A-2007/149131
- US-A- 3 780 777
- US-A- 5 014 583

## Beschreibung

Die Erfindung betrifft ein Verfahren zum Betreiben einer Plattenaufteilanlage gemäß dem Oberbegriff des Anspruchs 1. Gegenstand der Erfindung ist ferner eine Plattenaufteilanlage zum Aufteilen großformatiger plattenförmiger Werkstücke, insbesondere von Möbelteilen, gemäß dem Oberbegriff des Anspruchs 4.

Die DE 36 09 331 C1 beschreibt eine Säge- und Bohrmaschine zum Aufteilen und Bohren plattenförmiger Werkstücke. Bei der bekannten Plattenaufteilanlage liegen die Werkstücke auf einem Zuführtisch, von dem sie mittels Spannzangen, die an einem beweglichen Programmschieber befestigt sind, einer Säge zugeführt und relativ zu dieser positioniert werden können. An einem Sägewagen der Säge ist neben den üblichen Kreissägeblättern auch ein Bohraggregat vorhanden, mit dem ein gewünschtes Bohrbild in der Platte realisiert werden kann.

EP 0 230 297 A2 beschreibt ein Verfahren zum Vermessen eines Werkstücks auf einer Bearbeitungsstraße. Sobald der der vordere Rand des Werkstücks von einer Kamera erfasst wird, wird eine Rollenbahn, welches das Werkstück transportiert, abgebremst. Dieses Dokument offenbart den Oberbegriff der Ansprüche 1 und 4.

Aufgabe der vorliegenden Erfindung ist es, ein Verfahren und eine Plattenaufteilanlage der eingangs genannten Art zu schaffen, so dass eine hohe Materialflussgeschwindigkeit und gleichzeitig ein präzises Arbeitsergebnis erreicht werden.

Diese Aufgabe wird durch ein Verfahren mit den Merkmalen des Anspruchs 1 sowie eine Plattenaufteilanlage mit den Merkmalen des Patentanspruchs 4 gelöst. Vorteilhafte Weiterbildungen sind in Unteransprüchen angegeben. Für die Erfindung wichtige Merkmale finden sich darüber hinaus in der nachfolgenden Beschreibung und in der Zeichnung.

Bei den bisher bekannten Plattenaufteilanlagen wurde das Werkstück relativ zu der Trennlinie im Grunde ausschließlich auf der Basis der aktuellen Position der Fördereinrichtung selbst oder einer Vorderkante des aufzuteilenden Werkstücks positioniert. Erfindungsgemäß wurde nun jedoch erkannt, dass bei vielen Werkstücken eine Positionierung relativ zu einer in oder an dem Werkstück vorhandenen Referenzmarke ein deutlich besseres Arbeitsergebnis ermöglicht, also eine präzisere Positionierung der Schnittkante.

Eine nochmalige Verbesserung des Arbeitsergebnisses, also eine noch präzisere Positionierung beispielsweise von Bohrungen oder Nuten relativ zu einer Schnittkante des Werkstücks wird dadurch erreicht, dass eine Breite eines Werkzeugs der Aufteileinrichtung bei der Positionierung berücksichtigt wird.

Bei dem erfindungsgemäßen Verfahren bzw. der Erfindungsgemäßen Vorrichtung erfolgt die Referenzierung bzgl. einer Bohrung bzw. einer Nut. Besonders bei Möbelteilen wird hierdurch eine hohe Maßgenauigkeit der hergestellten Werkstücke erreicht, was für einen einfachen Zusammenbau und einen guten optischen Eindruck der fertigen Möbel wichtig ist.

Eine preiswerte und zuverlässige Möglichkeit der Erfassung der Referenzmarke besteht beispielsweise in einer Kamera oder einem Laserscanner, die jeweils optisch arbeiten.

Eine weitgehend komplette Bearbeitung eines Werkstücks und damit eine schnelle, zuverlässige und preisgünstige Herstellung eines solchen Werkstücks wird erreicht, wenn in einem Arbeitsfluss zunächst die Bohrungen bzw. Nuten in das aufzuteilende Werkstück eingebracht werden, dann ein Längsschnitt mittels der Aufteileinrichtung erfolgt, danach das Werkstück um 90° gedreht wird, dann anhand der Bohrungen als Referenzmarken das Werkstück relativ zur Trennlinie positioniert wird, und weiter ein Querschnitt an dem abgetrennten Werkstück durchgeführt wird.

Die gesamten Vorgänge der Plattenaufteilanlage, beispielsweise auch die gerade aufgezählte Abfolge von Schritten, können vollautomatisch durch eine entsprechend programmierte Steuer- und Regeleinrichtung gesteuert bzw. geregelt werden. Hierdurch wird Personal zur Bedienung der Plattenaufteilanlage eingespart, bzw. ein solches Personal wird entlastet.

Bevorzugte Orte für die Anordnung der Erfassungseinrichtung sind ein oberhalb der Aufteileinrichtung angeordneter Druckbalken und/oder ein Bereich seitlich vom Zuführtisch, dort beispielsweise ein Winkellineal. Beide Stellen ermöglichen einen freien "Blick" von der Erfassungseinrichtung auf die zur Aufteileinrichtung gelangenden Werkstücke und damit eine zuverlässige Erfassung der Referenzmarke. Möglich ist aber auch eine Anordnung der Erfassungseinrichtung unterhalb des Zuführtisches, wodurch auch ein auf der Unterseite eines Werkstücks vorhandenes Bohrbild oder vorhandene Nuten erfasst werden können.

Um auch bei sehr großen Werkstücken den gesamten Werkstückbereich von der Erfassungseinrichtung erfassen zu können, ist es vorteilhaft, wenn die Erfassungseinrichtung längs und/oder quer zu der Trennlinie beweglich ist. Im Zusammenhang mit der oben erwähnten Steuer- und/oder Regeleinrichtung wird die Bewegung der Erfassungseinrichtung vorteilhafterweise durch diese gesteuert bzw. geregelt. Auch die Bewegung der Erfassungseinrichtung ist in diesem Falle automatisiert, wodurch das Bedienpersonal der Plattenaufteilanlage entlastet wird.

Nachfolgend wird eine beispielhafte Ausführungsform der Erfindung unter Bezugnahme auf die einzige Figur erläutert. In der Figur ist eine Plattenaufteilanlage perspektivisch dargestellt.

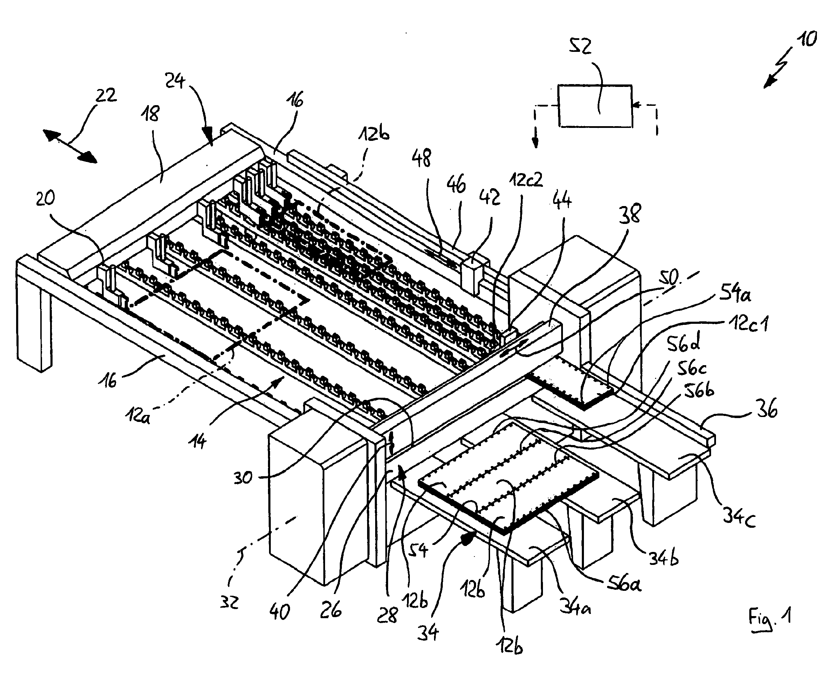

Eine Plattenaufteilanlage trägt in Fig. 1 insgesamt das Bezugszeichen 10. Sie dient zum Aufteilen großformatiger plattenförmiger Werkstücke. Ein solches ist in Fig. 1 schematisch strichpunktiert gezeichnet und mit dem Bezugszeichen 12a versehen. Das Werkstück 12a liegt auf einem durch eine Mehrzahl von Rollenbahnen gebildeten Zuführtisch 14.

Auf zu dem Zuführtisch 14 seitlichen Führungsschienen 16 ist ein portalartiger Querträger 18, der auch als Programmschieber bezeichnet wird, verschieblich gelagert. An dem Programmschieber 18 sind mehrere Spannzangen 20 befestigt, von denen aus Gründen der Übersichtlichkeit nur eine mit einem Bezugszeichen versehen ist. Mit ihnen kann ein hinterer Rand des Werkstücks 12a gegriffen und dieses so auf dem Zuführtisch 14 vor und zurück bewegt werden, entsprechend dem Doppelpfeil 22. Die Spannzangen 20 und der Programmschieber 18 bilden insoweit insgesamt eine Fördereinrichtung 24 für das Werkstück 12a.

In Fig. 1 rechts vom Zuführtisch 14 schließt sich an diesen ein Maschinentisch 26 an, der zu einer Aufteileinrichtung 28 gehört. Unterhalb des Maschinentisches 26 ist ein in Fig. 1 nicht gezeigter Sägewagen vorhanden, der quer zur Förderrichtung 22 der Fördereinrichtung 24 bewegt werden kann und an dem ein vertikal verschiebliches Kreissägeblatt und ein entsprechender Antrieb angeordnet sind. Ferner verfügt der Sägewagen über ein Bohraggregat mit vertikaler Bohrachse sowie über einen sich ebenfalls vertikal erstreckenden Fingerfräser. Das Kreissägeblatt, der Bohrer sowie der Fingerfräser können durch einen Sägespalt 30 im Maschinentisch 26 nach oben über die Ebene des Maschinentisches 26 hinaus bewegt werden. Durch die Position des Kreissägeblattes wird eine Trennlinie definiert, die in Fig. 1 durch eine strichpunktierte Linie 32 angedeutet ist.

Wiederum in Fig. 1 rechts von dem Maschinentisch 26 ist ein Entnahmetisch 34 vorhanden, der sich aus drei einzelnen Tischelementen 34a, 34b und 34c zusammensetzt. Bei dem Entnahmetisch 34 handelt es sich um einen Luftkissentisch, er verfügt also über Luftaustrittsöffnungen, die mit einer nicht gezeigten Druckquelle verbunden sind. Seitlich vom in Fig. 1 hinteren Tischelement 34c ist ein Winkellineal 36 befestigt.

Oberhalb des Maschinentisches 26 und des Sägespalts 30 ist ein vertikal beweglicher Druckbalken 38 angeordnet. Über entsprechende Antriebe kann der Druckbalken 38 entsprechend dem Doppelpfeil 40 angehoben oder bis herab auf den Maschinentisch 26 abgesenkt werden.

Die Plattenaufteilanlage 10 verfügt über zwei Erfassungseinrichtungen 42 und 44. Bei diesen handelt es sich vorliegend jeweils um einen Laserscanner. Bei einer nicht dargestellten Ausführungsform handelt es sich dagegen um eine CCD-Kamera. Die Erfassungseinrichtung 42 ist an einer Schiene 46, die seitlich vom Zuführtisch 14, oberhalb der in Fig. 1 hinteren Führungsschiene 16 angeordnet ist, befestigt. Sie kann längs der Schiene 46 durch einen entsprechenden Antrieb bewegt werden, was durch den Doppelpfeil 48 angedeutet ist.

Die Erfassungseinrichtung 44 ist auf der dem Zuführtisch 14 zugewandten Seite des Druckbalkens 38 an diesem befestigt. Sie kann längs des Druckbalkens 38, also parallel zur Trennlinie 32 durch einen entsprechenden Antrieb bewegt werden, was durch einen Doppelpfeil 50 angedeutet ist. Bei beiden Erfassungseinrichtungen 42 und 44 handelt es sich also um optische Systeme, die auf den Zuführtisch 14 bzw. die auf diesem liegenden Werkstücke 12 gerichtet sind. Bei einer nicht gezeigten Ausführungsform ist zusätzlich oder alternativ unterhalb des Zuführtisches noch eine Erfassungseinrichtung angeordnet, deren Optik die Unterseite der auf dem Zuführtisch liegenden Werkstücke erfassen kann.

Zu der Plattenaufteilanlage 10 gehört auch eine Steuer- und Regeleinrichtung 52, welche den Betrieb der Plattenaufteilanlage 10 in erheblichem Umfange automatisch steuert bzw. regelt. Hierzu verfügt die Steuer- und Regeleinrichtung 52 über einen Speicher, auf dem ein Computerprogramm zur Ausführung bestimmter Verfahrensschritte gespeichert ist.

Die Plattenaufteilanlage wird folgendermaßen betrieben:

Zunächst wird das Werkstück 12a von den in seinem Bereich vorhandenen Spannzangen 20 gegriffen und der Aufteileinrichtung 28 zugeführt. Dabei wird zunächst nicht die Kreissäge, sondern das Bohraggregat betrieben. Mit diesem werden Reihen von Durchgangslöchern in das noch zusammenhängende Werkstück 12a eingebohrt. Während des Bohrvorgangs einer Reihe ist der Druckbalken 38 auf das Werkstück 12a abgesenkt, wodurch dieses im Bereich des Sägespalts 30 fixiert ist. Die Durchgangslöcher sind in Fig. 1 mit 54 bezeichnet, wobei aus Gründen der Übersichtlichkeit nur ein Durchgangsloch mit Bezugszeichen versehen ist. Sind alle Durchgangslöcher 54 in das Werkstück 12a eingebohrt, wird das Werkstück 12a von der Fördereinrichtung 24 wieder in Richtung Zuführtisch 14 zurückgezogen in eine solche Position relativ zur Trennlinie 32, dass mittels der Säge eine erste Trennkante 56a erzeugt wird. Durch sukzessives Bewegen des Werkstücks 12a in Richtung Entnahmetisch und sägen mittels der Säge werden insgesamt drei weitere Trennkanten 56b, 56c und 56d erzeugt, wodurch das ursprüngliche großformatige Werkstück 12a in drei Streifen 12b aufgeteilt wird.

Ein Streifen 12b wird nun von einer Bedienperson der Plattenaufteilanlage 10 auf das in Fig. 1 hintere Tischelement 34c des Entnahmetisches 34 geschoben, um 90° gedreht und am Winkellineal 36 in Anlage gebracht. Dann schiebt die Bedienperson den Streifen 12b in Richtung Zuführtisch 14, so dass er nun von den in seinem Bereich liegenden Spannzangen 20 der Fördereinrichtung 24 gegriffen werden kann. Der Streifen 12b wird jetzt von der Fördereinrichtung 24 langsam unter der Erfassungseinrichtung 44 hindurch bewegt. Dabei werden von der CCD-Kamera 44 die gebohrten Durchgangslöcher 54 als Referenzmarken erfasst.

Da der Steuer- und Regeleinrichtung 52 die aktuelle Position des Programmschiebers 18 jederzeit bekannt ist (beispielsweise über ein entsprechendes Wegmesssystem), und da durch die CCD-Kamera 44 und die hierdurch mögliche Bilderkennung die Position beispielsweise der vordersten beiden Durchgangslöcher (Bezugszeichen 54a Fig. 1) bekannt ist, können diese beiden Werte miteinander verknüpft werden. Auf diese Weise kann die Steuer- und Regeleinrichtung 52 nun den Programmschieber 18 so ansteuern, dass er den Streifen 12b relativ zur Trennlinie 32 so positioniert, dass die beiden als Referenzmarken dienenden Durchgangslöcher 54a einen ganz bestimmten und gewünschten Abstand zu der Trennlinie 32 haben. Dabei wird von der Steuer- und Regeleinrichtung 52 berücksichtigt, dass das Sägeblatt der Aufteileinrichtung 28 eine bestimmte Dicke bzw. Breite hat. Nach der Positionierung des Streifens 12b wird wieder der Druckbalken 38 abgesenkt und der Streifen 12b durch einen Sägeschnitt längs der Trennlinie 32 in zwei Fertigteile 12c1 und 12c2 aufteilt. Dieser Trennschnitt erfolgt also, trotz der zwischenzeitlich erfolgten Drehung des Streifens 12b durch die Bedienperson, exakt in einem gewünschten Abstand relativ zu den beiden Referenzmarken 54a.

## Patentansprüche

1. Verfahren zum Betreiben einer Plattenaufteilanlage (10) für plattenförmige Werkstücke (12), insbesondere Möbelteile, bei dem mindestens ein auf einem Zuführtisch (14) liegendes Werkstück (12) von einer Fördereinrichtung (24) zu einer Aufteileinrichtung (28), insbesondere einer Säge oder einem Fräser, gefördert und relativ zu dieser positioniert wird, wobei mindestens eine in oder an dem Werkstück (12b) vorhandene Referenzmarke (54a) mittels mindestens einer Erfassungseinrichtung (42, 44) erfasst wird; **dadurch gekennzeichnet, dass** es in einem Arbeitsfluss folgende Schritte umfasst:
a) Einbringen einer Vielzahl von Bohrungen (54) und/oder Nuten in ein der Aufteileinrichtung zugeführtes, aufzuteilendes Werkstück (12a),
b) Aufteilen des Werkstücks (12a) durch mindestens einen Längsschnitt (56a-d) mittels der Aufteileinrichtung (28),
c) Drehen eines abgetrennten Werkstücks (12b) um 90°,
d) Erfassen der Position einer Referenzmarke (54a) in Form einer der im Schritt (a) eingebrachten Bohrungen (54) und/oder Nuten durch die Erfassungseinrichtung (42, 44), und gleichzeitig
e) Erfassen der Position der Fördereinrichtung (24);
f) Verknüpfen der beiden Positionswerte;
g) Positionieren des Werkstücks (12b) mittels der Fördereinrichtung (24) relativ zu einer Trennlinie (32) der Aufteileinrichtung (28) derart, dass die Referenzmarke (54a) einen gewünschten Abstand zu der Trennlinie (32) hat, wobei bei der Positionierung des Werkstücks (12b) relativ zu der Trennlinie (32) eine Breite eines Werkzeugs der Aufteileinrichtung (28) berücksichtigt wird;
h) Aufteilen des Werkstücks (12b) längs der Trennlinie (32) mittels der Aufteileinrichtung (28).

2. Verfahren nach Anspruch 1, **dadurch gekennzeichnet, dass** die Referenzmarke eine Bohrung (54a) oder eine Nut oder eine Werkstückkante (56) umfasst.

3. Verfahren nach einem der vorhergehenden Ansprüche, **dadurch gekennzeichnet, dass** die Referenzmarke (54a) optisch erfasst wird.

4. Plattenaufteilanlage (10) zum Aufteilen plattenförmiger Werkstücke (12), insbesondere von Möbelteilen, mit einem Zuführtisch (14), einer Aufteileinrichtung (28), und einer Fördereinrichtung (24) zum Zuführen des Werkstücks (12) zu und Positionieren des Werkstücks (12) relativ zu der Aufteileinrichtung (28), die mindestens eine Erfassungseinrichtung (42,44) umfasst, mit der eine an oder in dem Werkstück (12b) vorhandene Referenzmarke 54 a erfasst werden kann, und dass sie eine Steuer- und/oder Regeleinrichtung (52) umfasst, welche mit der Erfassungseinrichtung (42, 44), der Fördereinrichtung (24) und der Aufteileinrichtung (28) verbunden ist, **dadurch gekennzeichnet, dass** sie zur Ausführung eines Verfahrens nach einem der vorhergehenden Ansprüche programmiert ist.

5. Plattenaufteilanlage (10) nach Anspruch 4, **dadurch gekennzeichnet, dass** die Erfassungseinrichtung (42, 44) eine Kamera und/oder einen Laserscänner umfasst.

6. Plattenaufteilanlage (10) nach einem der Ansprüche 4 oder 6, **dadurch gekennzeichnet, dass** mindestens eine Erfassungseinrichtung (44) an einem oberhalb der Aufteileinrichtung (28) angeordneten Druckbalken (38) oder einem parallel zum Druckbalken angeordneten Portal angeordnet ist.

7. Plattenaufteilanlage (10) nach einem der Ansprüche 4 bis 6, **dadurch gekennzeichnet, dass** mindestens eine Erfassungseinrichtung (42) seitlich vom Zuführtisch (14) angeordnet ist.

8. Plattenaufteilanlage (10) nach einem der Ansprüche 4 bis 7, **dadurch gekennzeichnet, dass** mindestens eine Erfassungseinrichtung (42, 44) unterhalb des Zuführtisches (14) angeordnet ist.

9. Plattenaufteilanlage (10) nach einem der Ansprüche 4 bis 8, **dadurch gekennzeichnet, dass** die Erfassungseinrichtung (42, 44) längs und/oder quer zu der Trennlinie 32 beweglich ist.

## Claims

1. A method for operating a panel dividing system (10) for panel-like workpieces (12), in particular furniture parts, in which a workpiece (12) resting on a delivery table (14) is conveyed by a conveyor system (24) to a dividing device (28), in particular a saw or milling cutter, and is positioned relative thereto, and at least one reference mark (54a) present in or on the workpiece (12b) is detected by means of at least one detection device (42, 44), **characterized in that** in a workflow, it includes the following steps:
a) making a plurality of bores (54) and/or grooves in a workpiece (12a) to be devided that is delivered to the dividing device;
b) by means of the dividing device (28), dividing the workpiece (12a) by making at least one longitudinal cut (56a-d);
c) rotating a cut-off workpiece (12b) by 90°;
d) by means of the detection device (42, 44), detecting the position of a reference mark (54a) in the form of the bores (54) and/or grooves made in step (a); and simultaneously
e) detecting the position of the conveyor system (24);
f) linking the two position values;
g) by means of the conveyor system (24), positioning the workpiece (12b) relative to a cutting line (32) of the dividing device (28) in such a manner that the reference mark (54a) has a desired spacing from the cutting line (32), and in positioning the workpiece (12b) relative to the cutting line (32), a width of a tool of the sizing device (28) is taken into account;
h) by means of the sizing device (28), sizing the workpiece (12b) along the cutting line (32).

2. The method as defined by claim 1, **characterized in that** the reference mark includes a bore (54) or a groove or a workpiece edge (56).

3. The method as defined by one of the foregoing claims, **characterized in that** the reference mark (54a) is detected optically.

4. A panel dividing system (10) for sizing panel-like workpieces (12), in particular furniture parts, having a delivery table (14), a sizing device (28), and a conveyor system (24) for delivering the workpiece (12) to and positioning the workpiece (12) relative to the sizing device (28), the system including at least one detection device (42, 44), with which a reference mark (54a) present on or in the workpiece (12b) can be detected, and including a control or regulating device (52) which is connected to the detection device (42, 44), the conveyor system (24) and the dividing device (28), **characterized in that** the system is programmed for performing a method as defined by one of the foregoing claims.

5. The panel dividing system (10) as defined by claim 4, **characterized in that** the detection device (42, 44) includes a camera and/or a laser scanner.

6. The panel dividing system (10) as defined by one of claims 4 or 6, **characterized in that** at least one detection device (44) is disposed on a pressure bar (38) disposed above the sizing device (28) or on a portal disposed parallel to the pressure bar.

7. The panel dividing system (10) as defined by one of claims 4-6, **characterized in that** at least one detection device (42) is disposed laterally of the delivery table (14).

8. The panel dividing system (10) as defined by one of claims 4-7, **characterized in that** at least one detection device (42, 44) is disposed beneath the delivery table (14).

9. The panel dividing system (10) as defined by one of claims 4-8, **characterized in that** the detection device (42, 44) is movable longitudinally and/or transversely relative to the cutting line (32).

## Revendications

1. Procédé permettant de faire fonctionner une installation de division de plaques (10) pour des pièces (12) en forme de plaque, en particulier des éléments de meuble, selon lequel au moins une pièce (12) située sur une table d'alimentation (14) est transportée par un dispositif de transport (24) à un dispositif de division (28), en particulier une scie ou une fraise, et positionnée par rapport à celui-ci, au moins une marque de référence (54a) présente dans ou sur la pièce (12b) étant détectée au moyen d'au moins un dispositif de détection (42, 44), **caractérisé en ce qu'**il comprend les étapes suivantes au cours d'un déroulement d'opérations:
a) la pratique de plusieurs trous (54) et/ou rainures dans une pièce (12a) destinée à être divisée et amenée au dispositif de division,
b) la division de la pièce (12a) par au moins une coupe longitudinale (56a-d) au moyen du dispositif de division (28),
c) l'amenée en rotation de 90° d'une pièce séparée (12b),
d) la détection de la position d'une marque de référence (54a) sous forme d'un des trous (54) et/ou d'une des rainures pratiquées au cours de l'étape (a) par le dispositif de détection (42, 44), et simultanément
e) la détection de la position du dispositif de transport (24);
f) le croisement des deux valeurs de position;
g) le positionnement de la pièce (12b) au moyen du dispositif de transport (24) par rapport à une ligne de séparation (32) du dispositif de division (28), de telle sorte que la marque de référence (54a) présente un écart souhaité avec la ligne de séparation (32), une largeur d'un outil du dispositif de division (28) étant prise en compte lors du positionnement de la pièce (12b) par rapport à la ligne de séparation;
h) la division de la pièce (12b) le long de la ligne de séparation (32) au moyen du dispositif de division (28).

2. Procédé selon la revendication 1, **caractérisé en ce que** la marque de référence englobe un trou (54a) ou une rainure ou une arête de pièce (56).

3. Procédé selon l'une quelconque des revendications précédentes, **caractérisé en ce que** la marque de référence (54a) est détectée de façon optique.

4. Installation de division de plaques (10) destinée à diviser des pièces (12) en forme de plaque, en particulier des éléments de meuble, comprenant une table d'alimentation (14), un dispositif de division (28), et un dispositif de transport (24) destiné à amener la pièce (12) au dispositif de division (28) et à positionner la pièce (12) par rapport à celui-ci, ledit dispositif de division comprenant au moins un dispositif de détection (42, 44) permettant de détecter une marque de référence (54a) présente sur ou dans la pièce (12b), et comprenant un dispositif de commande et de réglage (52) relié au dispositif de détection (42, 44), au dispositif de transport (24) et au dispositif de division (28), **caractérisé en ce qu'**il est programmé pour réaliser un procédé selon l'une quelconque des revendications précédentes.

5. Installation de division de plaques (10) selon la revendication 4, **caractérisée en ce que** le dispositif de détection (42, 44) comprend une caméra et/ou un balayeur laser.

6. Installation de division de plaques (10) selon l'une quelconque des revendications 4 ou 6, **caractérisée en ce qu'**au moins un dispositif de détection (44) est disposé sur une barre de pression (38) disposée au-dessus du dispositif de division (28) ou un portique disposé parallèlement à la barre de pression.

7. Installation de division de plaques (10) selon l'une quelconque des revendications 4 à 6, **caractérisée en ce qu'**au moins un dispositif de détection (42) est disposé à côté de la table d'alimentation (14).

8. Installation de division de plaques (10) selon l'une quelconque des revendications 4 à 7, **caractérisée en ce qu'**au moins un dispositif de détection (42, 44) est disposé sous la table d'alimentation (14).

9. Installation de division de plaques (10) selon l'une quelconque des revendications 4 à 8, **caractérisée en ce que** le dispositif de détection (42, 44) est mobile le long de la ligne de séparation (32) et/ou transversalement à celle-ci.
